# EUROPEAN PATENT APPLICATION

(11) **EP 3 459 788 A1**
(43) Date of publication of application: **27.03.2019**
(21) Application number: 18196250.7
(22) Date of filing: 24.09.2018
(51) Int. Cl.: B60P 3/07

(54) **AUTONOMOUS DRIVING VEHICLE FOR TRANSPORTING OCCUPIED NON AUTONOMOUS POWERED VEHICLES**

(30) Priority: 22.09.2017 LU 100448
(71) Applicant: McGee, Mike, 1032 XM Amsterdam (NL)
(72) Inventor: McGee, Mike, 1032 XM Amsterdam (NL)

(57) **Abstract**

An autonomous electric vehicle configured to transport an occupied non autonomous vehicle along a road surface enabling the non autonomous vehicle to join an autonomous vehicle traffic flow. The autonomous electric vehicle comprising sensors for detecting vehicle surroundings and road condition information; a steering mechanism; a mechanical means to allow moving a non autonomous vehicle; a processor for controlling movement of the autonomous electric vehicle; an electrical power source and an electric motor for moving the autonomous electric vehicle; a securing means to support the non autonomous vehicle during transport. The autonomous electric vehicle being capable of long distance journeys.

## Description

### Background

Autonomous electric vehicles replace human drivers with sensors and computer based intelligence, they also replace the polluting internal combustion engine with a cleaner electrical engine which may be powered by batteries or by fuel cell technology. Under current technology, autonomous vehicles can handle driving with other vehicles on major roadways and highways but they find it difficult to navigate busier or smaller alleyways. This is partly due to the fact that most conventional traffic already on the road does not include autonomous technology and the autonomous vehicle has no way of communicating with the conventional traffic. This in turn makes it impossible to predict the movement of other traffic or to know in advance which direction the conventional traffic will move. On major roadways, the road width and the typical driving distance required between human driven vehicles allows the autonomous vehicle to react and understand the traffic flow better than when the vehicles are travelling on small roads within a few inches of each other. A human driver is also unable to match the precise movements required to join an autonomous vehicle network, an autonomous vehicle convoy or an autonomous system of traffic where all cars are aware of each others movements.

In order to manage congestion and pollution levels, autonomous vehicle manufacturers have proposed creating highways and roadways where all vehicles are autonomous and connected in such a way that they share information regarding the driving conditions and the vehicle surroundings. This would create a very efficient system of travel where vehicles could travel within a few inches of one another at great speed and would be capable of acting as a single unit when performing maneuvers and stopping. This method of transport is currently not possible with conventional traffic and the limitations of human reflexes when for example perceiving an object in the road and applying the brakes.

Unfortunately, the cost of autonomous vehicle technology is out of reach of many vehicle owners and therefore to enable wide adaption of autonomous vehicle technology, there remains a need to allow conventional non autonomous vehicles which are owned by the majority of motorists to drive autonomously on a public road and/or join an autonomous traffic flow without requiring an upgrade of their vehicle to full autonomous capabilities. The current disclosure addresses such an issue.

### Technical Field

The present disclosure relates to an autonomous driving towing or trailer vehicle which moves a conventional powered vehicle and allows the conventional powered vehicle to drive autonomously on a public road and / or join a flow of autonomous traffic on a public road.

### Related Art

US 5,122,957 granted 16 June 1992, and US 5,229,941 granted 20 July 1993 both describe examples of autonomous vehicle technology.

US2017168503, published on 15 June 2017 Discloses Systems and methods relating to a lead vehicle and a follow vehicle. Wherein the follow vehicle is in communication with the lead vehicle and the driving controls of the follow vehicle are equipped with a wireless transceiver, controller, sensors, and interfaces for use with control systems such that the follow vehicle may be caused to follow the lead vehicle without human interaction with the follow vehicle.

The above disclosure does not discuss autonomous vehicle technology, the above disclosure requires an interface between the two vehicles which is costly to install.

US 20120029697, published on 2 February 2012 discloses a robotic transportation device. The device includes at least one motorized wheel, two docking and arms may include an adjustable wheel locking device. The controller module may cause the robotic transportation device to autonomously approach a target device, detect a device type, and adjust a position of the two docking arms and the two wheel stops in accordance with the device type. The controller module may move each adjustable wheel locking device under a target wheel of the target device to lock and lift the target wheels, and cause the robotic transportation device to autonomously transport the target device.

The above disclosure does not discuss autonomous road vehicle technology, the above disclosure is related to mainly indoor logistics such as hospitals and warehouses and short range journeys. It does not disclose motorway or road journeys or occupied vehicles.

US4797057 granted 10 January 1989 discloses a tow truck vehicle with a wheel lifting device.

Tow trucks equipped with a tow hitch are well know but such vehicles require the passengers to ride in the towing vehicle or leave the vehicle being towed in order to be loaded onto the towing vehicle or during transport. Tow trucks are also not intended to be used as a regular method of long distance travel and these vehicles are usually less efficient than the vehicle being transported.

US6129025 granted 10 October 2000 discloses a transportation/logistics system in which a pallet/vehicle with an automobile/container mounted/fixed thereon travels, a normal steering operation is carried out by an electronically controlled automatic steering system on the basis of steering information. When the pallet/vehicle is about to run off a lane on which it travels, the run-off is prevented by a fin on the pallet/vehicle which is inserted into a groove in a road. The pallet/vehicle obtains a driving force by a linear induction motor. In diverging (branching) and merging (converging) points, the diverging (branching)/merging (converging) of the pallet/vehicle advances with the fin inserted in a groove in a main line or a ramp. At the exit/entrance of the present invention to/from a general road, a mode interchange is provided to convert a traveling mode of an automobile/container, and mounts and fixes an automobile/container on the pallet/vehicle and unfastens such automobile/container.

Patent US6129025 is the closest related art. A pallet carries a normal vehicle on a road. The pallet relies upon a fin called the LDPF (Lane Deviation Prevention Fin) inserted into the modified road surface which has an FSD (fail safe ditch) to keep the vehicle in the correct lane and moving in the correct direction. The pallet interacts with GPS, stored map data and sensors in the modified road surface to detect speed and location. The pallet uses a linear induction motor. Regular vehicles may be fitted with the LDPF Fin in order to be allowed to access the transport system.

This system requires massive investment to modify all road surfaces where the system is in use. Vehicles require costly modification to enter the transport system and so entry for normal vehicles and self driving vehicles is not possible unless they use the pallet service or invest heavily in the required modificications. The roads cannot therefore be considered public roads as the public does not have access to the system when using their normal vehicles. The propulsion force of the system is supplied by a linear induction motor which is also expensive to build into every road surface.

In comparison, the claimed system of applicants claimed invention can be used on all existing public road surfaces by all existing road vehicles and can be accessed by all road users without any additional investment on the part of the road user.

### Definitions

For the purpose of this disclosure an autonomous electric driving vehicle is a vehicle lacking the typical human operated controls, seatbelts or seat which enable it to be legally driven by a human on a public road, which may drive using its motor without the interaction of a human operator on a public highway or public road. The autonomous driving vehicle may have a simple control mechanism such as a joystic or wireless enabled controller which may be controlled by a telephone based app to allow simple maneuvers to be carried out by the person controlling the vehicle such as where to park etc. A non autonomous powered vehicle is a vehicle with human operated controls and seating for humans which is powered by an internal combustion engine or an electric motor and requires interaction of a human operator to drive on a public highway or public road over long distances.

The term "public highway" or "public road " refers to any roadway open to the general public for use by both Human driven and autonomous vehicles.

The term unmodified road surface refers to roads such as asphalt, tarmac, cobblestone, highway, motorway, residential roads, country lanes and dirt roads and all roadways that are open to public which are constructed for use by vehicles such as cars, busses and trucks and have not been built or modified specifically for use by an autonomous system.

### Summary

An autonomous electric driving vehicle which includes sensors for detecting vehicle surroundings and road condition information; a mechanical system to allow the autonomous driving device to tow, carry or haul a second non autonomous powered vehicle (further referred to as a conventional vehicle), and a control system for controlling movement of both the autonomous vehicle and the conventional vehicle on a public road surface based on the information detected by the vehicle detecting sensors in addition to information supplied by GPS or a remote vehicle management system. The autonomous electric driving vehicle comprises a system to ensure that the conventional vehicle is safely secured to the autonomous driving vehicle.

The present disclosure relates to an autonomous driving towing or trailer vehicle which allows a conventional vehicle to join with the flow of autonomous traffic on a public road. Whereby a conventional vehicle is raised on to, attached to or drives on to an autonomous electric vehicle which then carries, moves or tows the conventional vehicle along a driving route. The passengers would remain in their conventional vehicle for the duration of the journey and are free to interact with the person sitting in the driving seat. Once the destination has been reached, the conventional vehicle is unloaded from, exits or detaches from the autonomous driving vehicle and the conventional vehicle continues it's journey under it's own power to the final destination for the conventional vehicle. At no point during the journey do the occupants of second non autonomous powered vehicle need to leave the vehicle and all stages of the journey are carried out with the occupants seated in the second non autonomous powered vehicle. A fleet of such autonomous electric driving vehicles could be used for long distance motorway driving to allow a motorway to act as an autonomous highway and reduce driver fatigue for the drivers involved.

### Brief description of the drawings

**Figure 1****.**

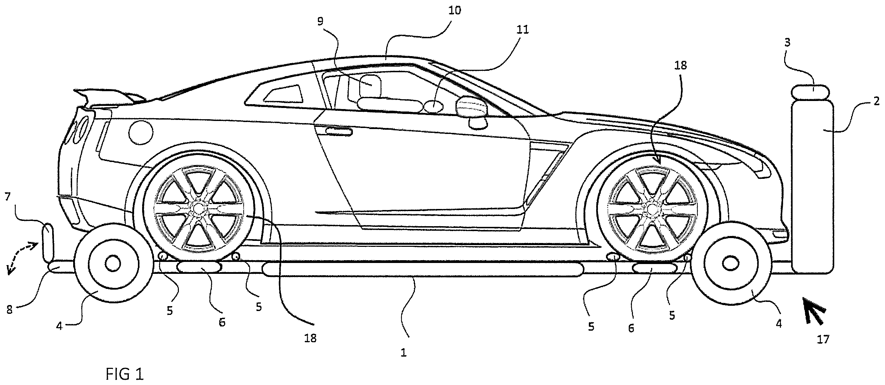

   Figure 1 shows a conventional vehicle (10) riding on the flat platform (8) of an autonomous driving vehicle (17). The autonomous driving vehicle (17) has driving sensors (3) to detect the road conditions and other vehicles. The battery (1) of the autonomous driving vehicle is stored in the platform (8) to lower the center of gravity of the autonomous driving vehicle. The ramp (7) is moveable and allows the conventional vehicle (10) to drive on to the platform (8). Braces (5) are placed in front and behind each wheel (18) of the conventional vehicle (10). Securing sensors (6) ensure that the conventional vehicle (10) is stable during transport.
**Figure 2****.**

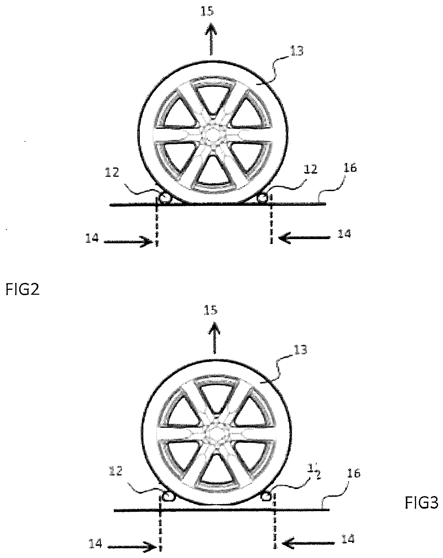

   Figure 2 shows a lifting method whereby a conventional vehicles wheel (13) is pinched (14) by two parallel lifting beams (12).
**Figure 3****.**
   Figure 3 shows the lifting method whereby the conventional vehicles wheel (13) is pinched (14) by two parallel lifting beams (12) and then lifted (15) from the road surface (16).
**Figure 4****.**

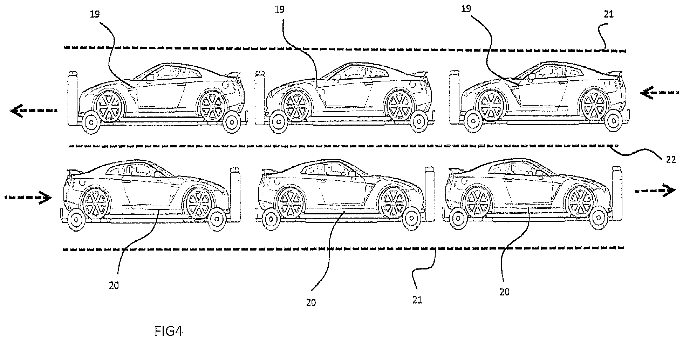

   Figure 4 shows a convoy (19)(20) of conventional vehicles riding on autonomous driving vehicles. The road markings (21)(22) could be software defined to allow multiple lanes of vehicles to travel in either direction depending of demands of the traffic.

### Detailed description

An autonomous driving vehicle which includes sensors such as cameras, or radar or Lidar or a combination of such sensors for detecting vehicle surroundings and road condition information; a mechanical mounting system such as a flat platform, towing hitch or wheel clamping method to allow the autonomous driving device to haul, tow, move, pull or carry a conventional vehicle, and a control unit for controlling movement of the autonomous vehicle and the conventional vehicle on a road surface based on the information detected by the device detecting sensors in addition to information supplied by GPS or a remote vehicle management system; a system of sensors such as pressure sensors to detect that the vehicle being transported is safely secured to the autonomous driving vehicle.

The present disclosure relates to an autonomous driving towing or trailer vehicle which allows a conventional vehicle to join with autonomous traffic flows. Whereby a conventional vehicle attaches via wheel clamping mechanism or a tow hitch or whereby the conventional vehicle drives on to the platform of an autonomous electric vehicle. The autonomous electric vehicle then carries, moves or tows the conventional vehicle along a driving route such as a portion of motorway or a busy highway. The passengers remain in their conventional vehicle for the duration of the journey and are free to interact with each other and may even sleep during the duration of the journey.

Once the selected destination has been reached, the occupants of the conventional vehicle are informed that the vehicle has reached it's destination and the two vehicles detach from one another. The driver then takes control of the conventional vehicle and the conventional vehicle driver continues on their journey using the engine and controls of the conventional vehicle. The conventional vehicle then continues under it's own power to the final destination. During the entire process of the journey the occupants of second non autonomous powered vehicle may remain seated in the second non autonomous powered vehicle.

Such an autonomous driving vehicle could be used for long distance motorway driving and would be ideal for but not limited to journeys between 1-12 hours (60-1000 km).

Many holiday travelers choose to use their personal conventional vehicles for vacations such as camping holidays and this usually involves a journey of several hours. This can lead to driver fatigue and many lives are lost on Europe's motorways each year to such driver fatigue. Such an autonomous driving vehicle could be used to reduce fatigue by allowing the driver to rest during long stretches of motorway driving.

Drivers may even choose to take their private conventional vehicles to destinations which they would not normally consider once they have the option of having their conventional vehicle moved by an autonomous driving vehicle whilst they occupy their conventional vehicle and rest in their seats.

Additionally long haul delivery vehicles are also required by law to have set breaks and are not allowed to drive more than a set number of hours per day. Such an autonomous driving vehicle could be used by long distance drivers and would offer a rest period of several hours whilst their conventional vehicle was moved or pulled along the road surface by the autonomous driving vehicle, this would allow a long haul delivery driver to have several hours rest after driving the maximum allowed duration and then the driver would be legally allowed to continue on their journey for another set number of hours. In this scenario the long haul delivery driver would be able to cover much longer distances using their conventional vehicle than would normally be legally possible.

An autonomous driving vehicle fleet would also allow governments and private companies to experiment with full autonomous systems of traffic flow without the need to have every user on the road to be in possession of an autonomous vehicle. Environmental zones could be set up whereby conventional vehicles are transported through an area such as a nature area or a heavily populated area. The conventional vehicles would be transported without using their polluting engines. The result would be a huge reduction in polluting particles and in increase in the health of the local nature or population. Such vehicles would also be much quieter that conventional vehicles and traffic noise would be greatly reduced.

Such autonomous driving vehicle could also be fitted with an electric winch or a towing hitch to allow collection of vehicles which had broken down at the side of the road. The owner of the disabled vehicle could summon the vehicle to a location on a public road and have the vehicle collect their vehicle and transport it to a safe location whilst the occupants ride in their own disabled vehicle.

The autonomous driving vehicle could also have a battery share function to allow it to transport other electric vehicles and allow the electric vehicle to charge whilst being transported, this would allow the driver of an electric vehicle to drive the maximum range allowed by their vehicle and then the depleted electric vehicle could board the autonomous driving vehicle and connect to the autonomous driving vehicle power source to the depleted electric vehicle power source. The electric vehicle could then be transported for a duration of time whilst it's power source is re charged or energized. Then upon detaching from the autonomous driving vehicle the electric vehicle could continue for another several hundred kilometers using it's own power source.

One huge benefit of such an autonomous driving vehicle would be the cost of electricity versus the cost of other fuel types. During 2017 in the Netherlands, the petrol costs were around 7.5 times the cost of the equivalent electricity for a standard family sized vehicle when compared to a Model S 100D tesla vehicle which has a range of around 500km and only costs around €10 in electricity to fully charge. An autonomous driving vehicle would be expected to achieve at least similar efficiency to the Tesla model S 100D and so energy costs for travel by road would be greatly reduced. This would allow the owner of the autonomous driving vehicle to charge users for the difference in the fuel costs before there would be any additional cost to the consumer of the service when compared to driving their own vehicle.

### Embodiments

In one embodiment the owner of a conventional vehicle approaches a roadway where autonomous driving vehicles are available as a travel option, using a mobile device such as a smartphone the owner of the conventional vehicle notifies the service provider of the autonomous driving vehicles that they wish to use an autonomous driving vehicle instead of continuing on the roadway using their conventional vehicle. An autonomous driving vehicle then approaches the conventional vehicle and positions itself to allow the conventional vehicle to board the autonomous driving vehicle, the rear of the autonomous driving vehicle lowers a ramp to allow the conventional vehicle to drive onto the autonomous driving vehicle. The conventional vehicle boards the autonomous driving vehicle and a chock or barrier is raised next to the wheels of the conventional vehicle to stop any movement of the conventional vehicle. The driver uses their mobile device to confirm that they are ready to begin the journey and the autonomous driving vehicle joins the traffic flow in the selected direction of travel. The vehicle occupants remain in contact with the autonomous driving vehicle via a mobile device and at any time can instruct the vehicle to stop such as in the case of an emergency. The vehicle occupants may also instruct the vehicle to stop at the next predetermined rest stop for refreshments. During such a refreshment stop the autonomous driving vehicle returns to a charging location to top up it's energy supply before being summoned back using the mobile device to continue the journey. The occupants of the conventional vehicle then arrive at their destination feeling refreshed and rested and are informed on their mobile device to un-board the autonomous driving vehicle. The chocks or barriers around the wheels are lowered and the autonomous driving vehicle lowers its's ramp. The conventional vehicle starts their vehicle and leaves the autonomous driving vehicle and then the driver instructs the autonomous driving vehicle via the mobile device that unloading has been successful. The conventional vehicle owner signals on their mobile device that they are ready to depart and the autonomous driving vehicle returns to a charging point or moves on to the next customer. The conventional vehicle owner is then billed an amount for use of the autonomous driving vehicle service and the conventional vehicle owner continues on their journey or exits the vehicle if the conventional vehicle is already correctly parked.

In one embodiment the owner of a petrol or diesel powered conventional car approaches a toll road where access is only permitted to autonomous driving vehicles, the driver of the conventional vehicle enters a driving lane which is used to board an autonomous driving vehicle. The conventional vehicle driver positions their conventional vehicle behind an autonomous driving vehicle. The autonomous driving vehicle then lifts the conventional vehicle off the road surface and supports the conventional vehicle. The driver indicates that they are ready to begin the journey and the autonomous driving vehicle drives on to the toll road and merges with the traffic flow of autonomous driving vehicles. After a predetermined distance the vehicles leave the toll road and the autonomous driving vehicle brings both vehicles to a standstill. The autonomous driving vehicle lowers the conventional vehicle onto the road surface and returns to a predetermined location. The conventional vehicle owner starts their vehicle and continues on their journey.

In one embodiment a portion of the autonomous driving vehicle drives under a portion of the conventional vehicle and several parallel lifting beams are extended from the autonomous driving vehicle beneath the sides of the conventional vehicle at around 90 degrees when compared to the side of the conventional vehicle and pointing towards the center line of the conventional vehicle. Two of the beams are placed next to the front and rear face of each individual tyre of the conventional vehicle as shown in figure 2. The two lifting beams which remain parallel are then drawn together so as to contact the front and rear tread face of each individual tyre the beams continue to be drawn closer to one another so as to pinch the front and rear tread face and cause the conventional vehicle wheel to lift off the road surface. All of the wheels of the conventional vehicle are lifted from the road surface and the entire mechanism including the parallel lifting beams are raised a further distance to allow the autonomous driving vehicle to transport the conventional vehicle without the conventional vehicle making contact with the road surface. The conventional vehicle may then be transported by the autonomous driving vehicle.

In one embodiment a portion of the autonomous vehicle drives alongside the conventional vehicle and several parallel lifting beams are extended from the autonomous driving vehicle. The lifting beams are then drawn together so as to contact the front and rear tread face of each individual tyre and cause the conventional vehicle wheel to lift off the road surface. The conventional vehicle is lifted from the road a suitable height to allow the autonomous driving vehicle to transport the conventional vehicle without the conventional vehicle making contact with the road surface.

In one embodiment the autonomous driving vehicle lifts the front wheels of the conventional vehicle off the road surface and allows the rear wheels of the conventional vehicle to remain in contact with the road surface while transporting the conventional vehicle.
In one embodiment the autonomous driving vehicle allows all of the wheels of the conventional vehicle to remain in contact with the road surface while transporting the conventional vehicle.

In one embodiment the autonomous driving vehicle is limited to driving along a single motorway and must be exchanged for another autonomous driving vehicle if the conventional vehicle wishes to travel on a second motorway.

In one embodiment the autonomous driving vehicle is configured to adjust it's speed and seek out other autonomous driving vehicles along the route and form an autonomous driving convoy to enable more efficient energy use.

In one embodiment the autonomous driving vehicle is configured to transport a conventional vehicle for between 20km and 1000km before requiring a charge.
In one embodiment the autonomous driving vehicles carry the conventional vehicles in a convoy formation at high speed at distances less than 1 meter between each of the autonomous driving vehicles.
Clause A - A first autonomous electric vehicle wherein the first autonomous electric vehicle is configured to transport a second occupied non autonomous powered vehicle from a first location to a second location along a road network over distances greater than 100km; Wherein the first autonomous electric vehicle has no human operated driving controls and lacks seating capacity;
   wherein the first electric vehicle causes the second non autonomous powered vehicle and its occupants to be autonomously moved from the first location to a second location.
Clause B The first autonomous electric vehicle of claim 1 wherein the first autonomous electric vehicle is configured to;
   approach the second non autonomous powered vehicle at a first location;
   transport the second non autonomous powered vehicle to a second location;
   and leave the second non autonomous powered vehicle at a second location;
   whereby all of the abovementioned steps are completed without requiring the occupants to exit the vehicles between any of the steps.

## Claims

1. A first autonomous electric vehicle, wherein the first autonomous electric vehicle is configured to move a second occupied non autonomous powered vehicle on a public highway or public road surface; wherein the first electric vehicle causes the second non autonomous powered vehicle and its occupants to be autonomously driven from a first location to a second location.

2. A first autonomous electric vehicle configured to move a second non-autonomous powered vehicle along a road surface while the second non-autonomous powered vehicle is occupied by one or more persons, wherein the first autonomous electric vehicle causes the second non-autonomous powered vehicle including the one or more persons to be autonomously transported from a first location to a second location, wherein the first autonomous vehicle is a vehicle arranged to drive autonomously on a public road and lacks human operated driving controls, and wherein the second non-autonomous powered vehicle is a vehicle arranged to be driven on a public road by one of the persons.

3. the first autonomous electric vehicle of claim 1 or 2 comprising a mechanical means to allow the first autonomous vehicle to securely remain in physical contact with a second occupied non autonomous powered vehicle whilst transporting the second occupied non autonomous powered vehicle from a first location to a second location.

4. The method of any of the preceding claims, wherein the second non autonomous powered vehicle is a vehicle powered by an internal combustion engine.

5. The first autonomous electric vehicle of any of the preceding claims wherein the first autonomous electric vehicle is configured to move the second non autonomous powered vehicle further than 200km.

6. The first autonomous electric vehicle of any of the preceding claims wherein the first autonomous electric vehicle is in communication with the occupants of the second non autonomous powered vehicle via a mobile device.

7. The first autonomous electric vehicle of any of the preceding claims wherein the first autonomous electric vehicle comprises sensors to ensure that the second vehicle is safely secured to the first autonomous vehicle during transport.

8. The method of any of the preceding claims, wherein the second non autonomous powered vehicle is a four wheeled vehicle.

9. The first autonomous electric vehicle of any of the preceding claims wherein the first autonomous electric vehicle is configured to allow the second non autonomous powered vehicle to charge its power source from the power source of the first autonomous electric vehicle whilst the vehicles are in motion.

10. The method of any of the preceding claims wherein the second non autonomous powered vehicle is carried on a platform portion of the first autonomous electric vehicle.

11. The first autonomous electric vehicle of any of the preceding claims, wherein the first autonomous electric vehicle enables the second non autonomous powered vehicle to join and become part of the traffic flow of fully autonomous vehicles.

12. The first autonomous electric vehicle of any of the preceding claims, wherein the method used to secure the second non autonomous powered vehicle to the first autonomous electric vehicle includes blocking, chocking or clamping the wheels of the second non autonomous powered vehicle.

13. The first autonomous electric vehicle of any of the preceding claims wherein the first autonomous electric vehicle is configured to move the second non autonomous powered vehicle further than 20km.

14. The first autonomous electric vehicle of any of the preceding claims wherein the first autonomous electric vehicle is configured to allow the occupants of the non autonomous powered vehicle to remain in the non autonomous powered vehicle during their entire journey including the portion of the journey before and after the autonomous portion of the journey.

15. The first autonomous electric vehicle of claim 1 wherein the first autonomous electric vehicle is configured to maintain the second non autonomous powered vehicle in a level position to allow the occupants to remain comfortable.
